# EUROPEAN PATENT SPECIFICATION

(11) **EP 0 380 368 B1**
(45) Date of publication and mention of the grant of the patent: **24.05.1995**
(21) Application number: 90300858.9
(22) Date of filing: 26.01.1990
(51) Int. Cl.: H04L 12/56

(54) **Cell switching system**
Zellenvermittlungssystem
Système de commutation de cellules

(30) Priority: 27.01.1989 JP 16224/89
(43) Date of publication of application: 01.08.1990
(73) Proprietor: NEC CORPORATION, Tokyo (JP)
(72) Inventor: Suzuki, Toshio, c/o NEC Coporation, Minato-ku, Tokyo (JP); Itoh, Atsuo, Minato-ku, Tokyo (JP)
(74) Representative: Orchard, Oliver John

(56) References cited:
- EP-A- 0 025 225
- EP-A- 0 231 967
- GB-A- 1 575 989
- PROCEEDINGS OF THE INT. CONFERENCE ON COMMUNICATIONS, Seattle, Washington, 7th- 10th June 1987, vol. 1, pages 769-773; J.-P. COUDREUSE et al.: "Prelude: An asynchronous time-division switched network"
- PROCEEDINGS OF THE INT. CONF. ON COMMUNICATIONS, Seattle, Washington, 7th -10th June 1987, vol. 1, pages 373-377; S. GOHARA et al.: "A new distributed switching system architecture for media integration"
- PROCEEDINGS OF THE INT. SWITCHING SYMPOSIUM, Phoenix, Arizona, 15th - 20th March 1987, pages 373-379; P. GERKE et al.: "Fast packet switching - A principle for future system generations?"

## Description

The invention relates to a cell switching system for transmitting data by using cells each having a fixed length. More particularly, the invention is concerned with a cell switching system of the type having time division lines each being associated with a different input and provided with a time division multiplex channel construction associated with an output, and selector means each being associated with a different output for selecting the time division lines periodically. This type of system switches individual cells to desired outputs by self-routing.

A cell switching system switches cells each consisting of data and an address indicative of a destination of the data. In this system, it often occurs that a plurality of cells meant for the same destination arrive at the same time. Such an occurrence may be coped with by combining a sorting circuit network and a routing circuit network such that a conflicting cell is reinputted in the routing circuit network, as taught by Alan Huang et al in an article titled "A Wideband Digital Switch" published in 1984 in the IEEE Global Telecommunications Conference Record. Another prior art implementation is the use of switch modules each being associated with a different output for selecting cells which come in via bus type inputs, as disclosed by Y.S. Yeh et al in an article titled "The Knockout Switch: A Simple, Modular Architecture For High-Performance Packet Switching" published in the Proceedings of the IEEE International Switching Symposium 1987.

However, a problem with the sorting and routing network scheme is that complicated processing is needed to prevent the conflicting cells from being inverted in order in the event of reinput. Another problem is that a broadcasting function for sending out the same data to a plurality of outputs at the same time is not readily practicable. The modular switch scheme has a disadvantage that switches have to be assigned one-to-one to all the outputs, resulting in a large hardware scale.

In the specification of UK patent number 1,575,989, which was published on October 1 1980, there was proposed a time division multiplex switching network having an input stage and an output stage, each of the stages having a corresponding plurality of time switches, each of the time switches including a data memory for storing data words in parallel, an associated connection memory and a commutator circuit for sequentially and periodically connecting each of the switches in the input stage to each of the switches in the output stage in a predetermined time invariant pattern.

Features of an arrangement to be described below to illustrate the present invention are a cell switching system having a relatively simple circuit construction, which delivers a plurality of cells meant for the same destination at the same time to a desired output.

The following description and drawings disclose, by means of an example, the invention which is characterised in the appended claims, whose terms determine the extent of the protection conferred hereby.

In the drawings:-
Fig. 1 is a schematic black diagram showing an embodiment of the cell switching system in accordance with the invention;
FIGS. 2A, 2B and 2C are timing chart demonstrating a specific operation of the system shown in FIG. 1 which occurs on the input side;
FIG. 3 is a flowchart associated with FIGS. 2A to 2C;
FIGS. 4A, 4B, 4C and 4D show channel arrangements on time division lines which are included in the system of FIG. 1;
FIGS. 5A to 5D illustrate the operation of selectors shown in FIG. 1;
FIGS. 6A to 6D show channel constructions on time division lines representative of another embodiment of the present invention; and
FIGS. 7A to 7D indicate the operation of selectors useful for understanding the embodiment shown in FIGS. 6A to 6D.

In the drawings, the same structural elements are designated by like reference numerals.

### DESCRIPTION OF THE PREFERRED EMBODIMENTS

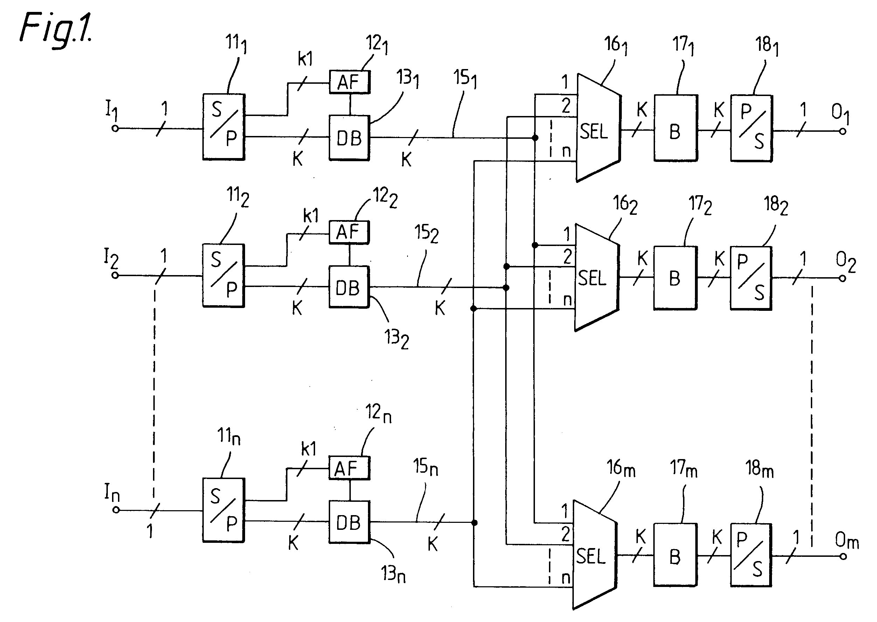

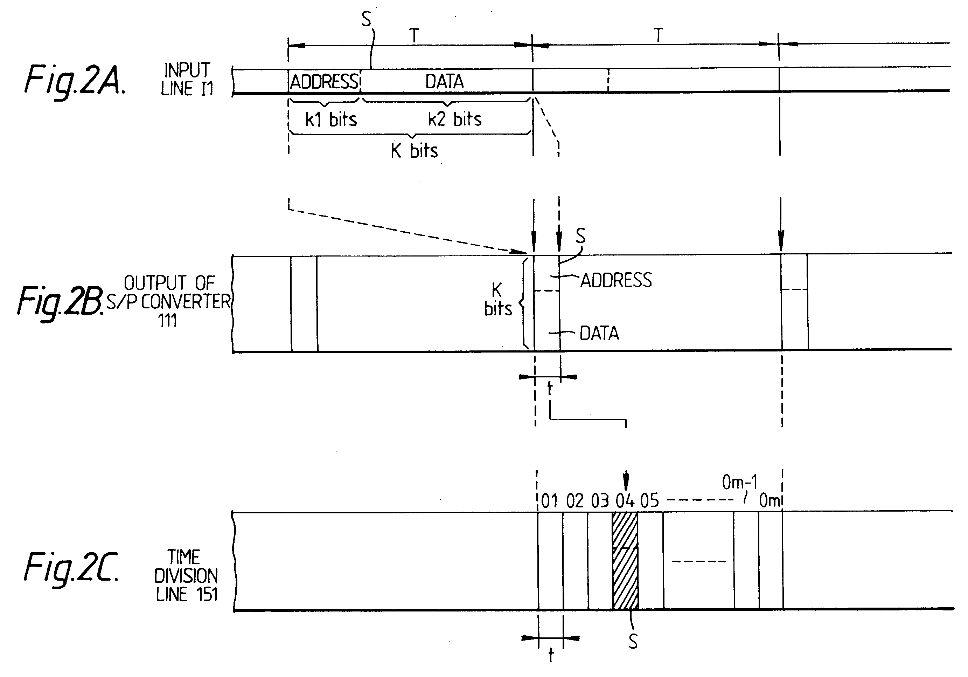

Referring to FIG. 1, a cell switching system embodying the present invention is shown in a block diagram. As shown, the system has n inputs I₁, I₂, ..., Iₙ and m outputs O₁, O₂, ..., Oₘ. The inputs I₁ to Iₙ are connected to serial-to-parallel (S/P) converters 11₁ to 11ₙ, respectively. As shown in FIG. 2A, cells each having a fixed length (K bits) arrive at each input during every period T of time. Each cell is made up of an address having k₁ bits and data having k₂ bits.

The S/P converters 11₁ to 11ₙ are respectively connected to address filters 12₁ to 12ₙ for identifying the addresses of individual cells, and delay buffers 13₁ to 13ₙ for delaying the individual cells based on the result of identification of the address filters. The delay buffers 13₁ to 13ₙ are connected to time division lines 15₁ to 15ₙ, respectively. The time division lines 15₁ to 15ₙ terminate respectively at corresponding ones of n input terminals of m selectors 16₁ to 16ₘ which are associated one-to-one with the outputs O₁ to Oₘ. Operated on a time division basis, each of the selectors 16₁ to 16ₘ sequentially selects the n inputs one at a time while feeding them out, as will be described in details later.

The selectors 16₁ to 16ₘ are connected to series connections of buffers 17₁ to 17ₘ and parallel-to-serial (P/S) converters 18₁ to 18ₘ, respectively. The P/S converters 18₁ to 18ₘ are connected to the outputs O₁ to Oₘ, respectively.

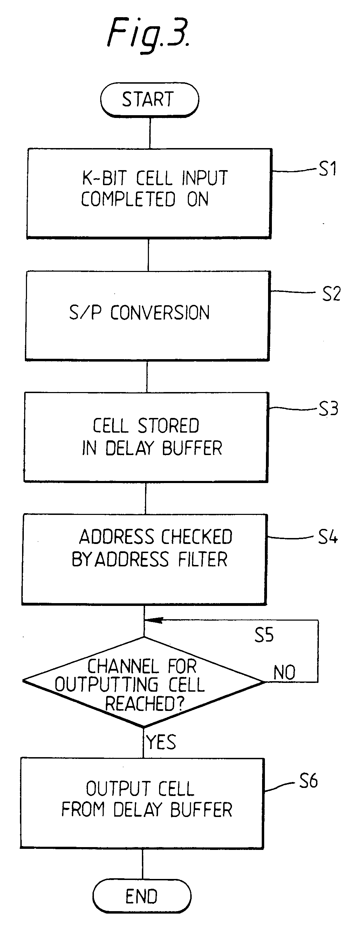

FIGS. 2A to 2C indicate a specific procedure for multiplexing incoming cells by the time division principle. The procedure will be described by taking the input I₁ for example and with reference also made to FIG. 3. As shown in FIG. 2A, a cell S having a k₁-bit address and k₂-bit data arrives at the input I₁ during the period T. When the entire string of bits constituting the cell S sent in series have arrived at the input I₁ (step S1, Fig. 3), it is transformed into parallel data by the associated S/P converter 11₁ (step S2). The S/P converter 11₁ may be implemented by a K-bit shift register, for example. The resulting parallel data are shown in FIG. 2B. The S/P conversion is effected such that m (number of outputs) cells can be time-division multiplexed within the cell length period T. Specifically, the cell length period t after the conversion of one cell satisfies the relationship T ≧ mt. The parallel data representative of the cell S are stored in the delay buffer 13₁ (step S3).

While performing S/P conversion as stated above, the S/P converter 11₁ separates the address from the cell S and delivers it to the associated address filter 12₁. On detecting the address of the cell S, the address filter 12₁ identifies one of the outputs O₁ to Oₘ (step S4) to which the cell S is destined. At the same time, the address filter 12₁ controls the delay buffer 13₁ such that the cell S is delayed by a required period of time and fed out to the time division line 15₁.

Specifically, as shown in FIG. 2C, m channels are defined on the time division line 15₁, and each of the channels is allotted the time t corresponding to the cell length period after serial-to-parallel conversion. The m channels are associated with the output lines O₁ to Oₘ, respectively. Assuming that the address of the cell S designates the output O₄, for example, the address filter 12₁ controls the associated delay buffer 13₁ such that the cell S having been stored in the delay buffer 13₁ is outputted when a time slot associated with the output O₄ shown in FIG. 2C is reached (steps S5 and S6). The same data may be fed out to plurality of output lines at a time by outputting it repetitively at a plurality of desired channel positions. For example, if address information commanding simulltaneous broadcast is set up beforehand, the address filter 12₁ will produce the same data on the desired channels every time it detects the address information.

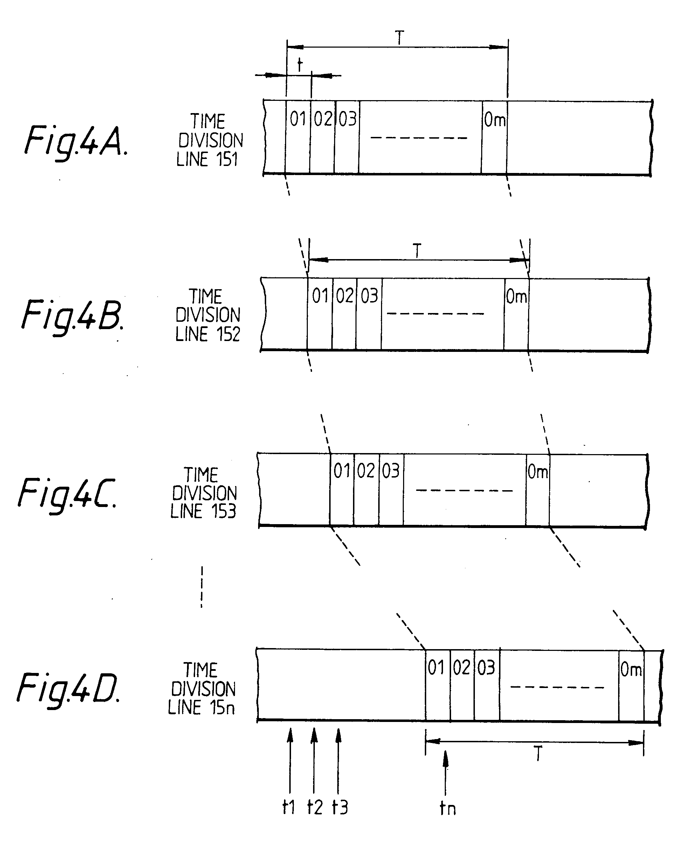

Each of the m selectors 16₁ to 16ₘ sequentially selects the time division lines 15₁ to 15ₙ at the intervals of t so as to store in associated one of the buffers 17₁ to 17ₘ the cell S which be fed out to the associated output line. The cells so lodged in the individual buffers 17₁ to 17ₘ are transformed into serial data by the associated P/S converters 18₁ to 18ₘ to be delivered to the output lines O₁ to Oₘ. It is noteworthy that all the n time division lines differ from one another with respect to the above-stated channel positions. This will be described specifically with reference to FIGS. 4A to 4D.

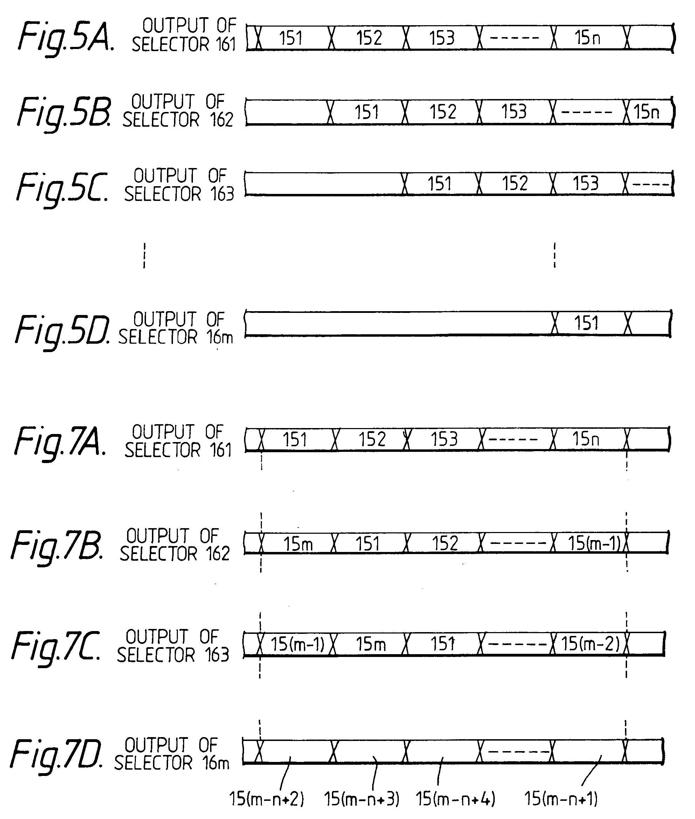

FIGS. 4A to 4D depict channel positions on the individual time division lines 15₁ to 15ₙ. As shown, the timing for the cell length period T to be repeated is sequentially deviated by the time t from the time division line 15₁ to the time division line 15ₙ, i.e., all the time division lines 15₁ to 15ₙ are different from one another with respect to the channel positions. Hence, only one channel that corresponds to a certain output exists at the same position on the time axis. At a time t₁, for example, a channel corresponding to the output O₁ exists on the time division line 15₁ only. The selectors 16₁ to 16ₘ, therefore, select the inputs in matching relation to the individual channel positions. For example, the selector 16₁ associated with the output O₁ selects the time division line 15₁ at the time t₁ and the time division line 15₂ at a time t₂. Likewise, the selector 16₂ selects the time division line 15₁ at the time t₂ and the time division line 15₂ at a time t₃. FIGS. 5A to 5D indicate such a relationship of selection timing in the selectors 16₁ to 16ₘ.

As stated above, only a single time division channel (cell) that should be fed out to a single output exists at any time on all the time division lines. This is successful in eliminating the conflict of cell. Hence, even when a plurality of cells having the same address arrive at the cell switching system at the same time, they can be fed out to a desired output without being discarded due to conflict or being inverted in sequence.

Every time one cell S is completed on any one of the inputs I₁ to Iₙ, it is delivered to a destined output within the next period T. It follows that each of the delay buffers 13₁ to 13ₙ needs only a K-bit (one cell) memory area. It will be clear that the buffers 17₁ to 17ₘ and the P/S converters 18₁ to 18ₘ can be implemented by K-bit memories and K-bit shift registers, respectively.

As described above, the illustration embodiment assigns a different repetition timing of the cell length period T to each input. This requires that different timing pulses be generated for and fed to the individual input lines (S/P converters, address filters and delay buffers) and individual output lines (selectors, buffers and P/S converters). Nevertheless, the selectors 16₁ to 16ₘ need only to switch over in response to the same timing pulses and period of which is T.

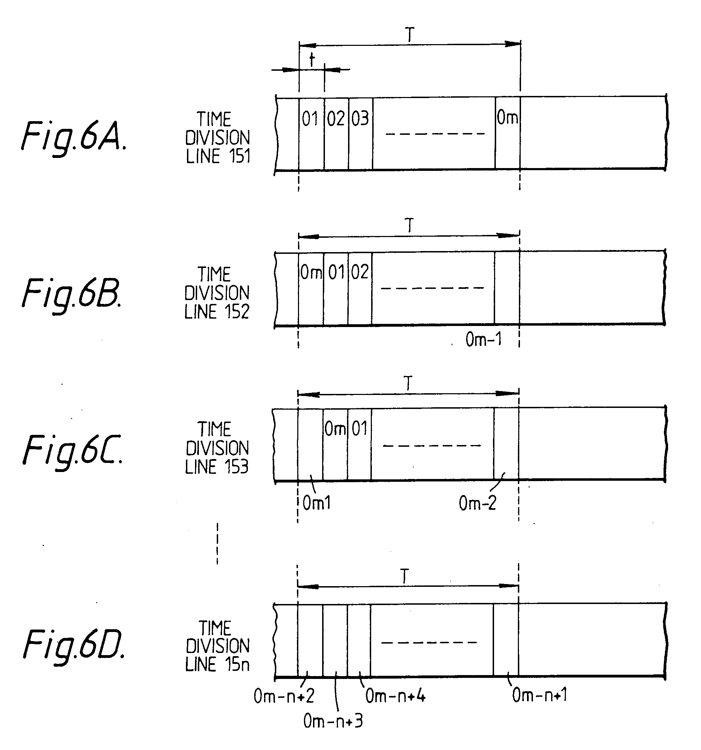

Referring to FIGS. 6A to 6D and FIGS. 7A to 7D another embodiment of the present invention is shown in which all the inputs I₁ to Iₙ and time division lines 15₁ to 15ₙ share the same timing concerning the repetition of the period T. In this embodiment, therefore, all the S/P converters 11₁ to 11ₙ are operated in synchronism. An advantage achievable with such a construction is that a pulse indicative of the beginning of the peirod T can be fed to all the circuits at the same timing, promoting easy control over the entire system. However, the control over the selectors 16₁ to 16ₘ is not easy because the order in which the time division lines 15₁ to 15ₙ is selected differs from one selector to another. Specifically, as shown in FIGS. 7A to 7D, the selector 16₁ sequentially selects the time division lines 15₁, 15₂, 15₃ and so forth in this order from the beginning of the period T, while the selector 16₂ selects the time division lines 15ₘ, 15₁, 15₂ and so forth in this sequence.

It will be understood that, although the invention has been illustrated by reference to a particular embodiment, variations and modifications thereof, as well as other embodiments may be made within the scope of the protection afforded by the appended claims.

## Claims

1. A cell switching system for receiving cells on a plurality of input lines (I₁--Iₙ), each cell having a fixed bit length and consisting of data and an address indicative of a destination for the data, for switching a cell such that the data are sent to a desired destination, and for sending out the switched cells via a plurality of output lines (O₁--Oₘ), the system including a plurality of time division lines (15), each time division line (15) being associated with a respective one of the input lines (I) and having a plurality of time division multiplex channels (m), each associated with a plurality of the output lines (O), a plurality of serial-to-parallel converting means (11) each being associated with a respective one of the input lines (I) for delivering an input cell to an associated one of the time division lines (15), a plurality of address filters (12), each filter (12) being associated with a respective one of the input lines (I) for identifying one of the output lines (O) to which a cell is destined on the basis of the address of the cell, and indicating a channel position associated with the one output line associated with one of the time division lines (15), a plurality of rearranging means (13), each rearranging means (13) being associated with a respective one of the input lines (I) for rearranging, in response to an indication from an associated one of the address filters (12), each of the cells on a time axis such that the cell is outputted at a particular identified position in a channel associated with a particular output line, and delivering the rearranged cell to an associated one of the time division lines (15), a plurality of selector means (16) each being associated with a respective one of the output lines (O) and connected to a plurality of the time division lines (15) for periodically selecting and outputting cells from a particular identified position in a channel associated with a respective selector means (16) on a time division line (15), and a plurality of parallel-to-serial converters (18), each converter (18) being associated with a respective one of the output lines (O) for delivering the cell selected by an associated one of the selector means (16), all of the time division lines (15) being related with respect to channel positions such that only a single channel that corresponds to one of the output lines (O) exists at any one position on a time axis, whereby the cells fed out to the same output are prevented from conflicting with each other.

2. A system as claimed in claim 1, wherein each of the rearranging means (13) includes a buffer (13) for temporarily storing an output of an associated one of the serial-to-parallel converting means (11) and, in response to a command from an associated one of the address filters (12), delivering the stored output to an associated one of the time division lines (15), while delaying the stored output.

3. A system as claimed in claim 2, wherein each of the address filters (12) is constructed to deliver the same cell to two or more of the output lines (O) for applying, while the same cell is stored in the buffer (13), a cell output command to two or more of the channel positions of the time division line.

## Patentansprüche

1. Zellenvermittlungssystem zum Empfangen von Zellen auf mehreren Eingangsleitungen (I₁ bis Iₙ), wobei jede Zelle eine feste Bitlänge hat und aus Daten und einer Adresse als Anzeige eines Ziels für die Daten besteht, zum Vermitteln einer Zelle derart, daß die Daten zu einem gewünschten Ziel gesendet werden, und zum Aussenden der vermittelten Zellen über mehrere Ausgangsleitungen (O₁ bis Oₘ), wobei das System aufweist:
mehrere Zeitvielfachleitungen (15), wobei jede Zeitvielfachleitung (15) zu einer entsprechenden der Eingangsleitungen (I) gehört und mehrere Zeitmultiplexkanäle (m) hat, die jeweils zu mehreren der Ausgangsleitungen (O) gehören;
mehrere Seriell-Parallel-Wandlereinrichtungen (11), die jeweils zu einer entsprechenden der Eingangsleitungen (I) gehören, zum Zuführen einer Eingabezelle zu einer zugehörigen der Zeitvielfachleitungen (15);
mehrere Adreßfilter (12), wobei jedes Filter (12) zu einer entsprechenden der Eingangsleitungen (I) gehört, zum Identifizieren einer der Ausgangsleitungen (O), für die eine Zelle bestimmt ist, auf der Grundlage der Adresse der Zelle und Anzeigen einer Kanalposition, die zu der einen Ausgangsleitung gehört, die zu einer der Zeitvielfachleitungen (15) gehört;
mehrere Umordnungseinrichtungen (13), wobei jede Umordnungseinrichtung (13) zu einer entsprechenden der Eingangsleitungen (I) gehört, zum Umordnen jeder der Zellen auf einer Zeitachse als Reaktion auf eine Anzeige von einem zugehörigen der Adreßfilter (12), so daß die Zelle an einer speziellen identifizierten Position auf einem Kanal ausgegeben wird, der zu einer speziellen Ausgangsleitung gehört, und Zuführen der umgeordneten Zelle zu einer zugehörigen der Zeitvielfachleitungen (15);
mehrere Selektoreinrichtungen (16), die jeweils zu einer entsprechenden der Ausgangsleitungen (O) gehören und mit mehreren der Zeitvielfachleitungen (15) verbunden sind, zum periodischen Auswählen und Ausgeben von Zellen von einer speziellen identifizierten Position auf einem Kanal, der zu einer entsprechenden Selektoreinrichtung (16) gehört, auf einer Zeitvielfachleitung (15); und
mehrere Parallel-Seriell-Wandler (18), wobei jeder Wandler (18) zu einer entsprechenden der Ausgangsleitungen (O) gehört, zum Zuführen der Zelle, die durch eine zugehörige der Selektoreinrichtungen (16) ausgewählt ist; wobei
alle Zeitvielfachleitungen (15) im Hinblick auf Kanalpositionen eine solche Beziehung haben, daß nur ein einziger Kanal, der der einen der Ausgangsleitungen (O) entspricht, an einer Position auf einer Zeitachse existiert, wodurch ein Konflikt zwischen den zu dem gleichen Ausgang herausgeführten Zellen verhindert wird.

2. System nach Anspruch 1, wobei jede der Umordnungseinrichtungen (13) aufweist: einen Puffer (13) zum zeitweiligen Speichern einer Ausgabe einer zugehörigen der Seriell-Parallel-Wandlereimrichtungen (11) und Zuführen der gespeicherten Ausgabe als Reaktion auf ein Kommando von einem zugehörigen der Adreßfilter (12) zu einer zugehörigen der Zeitvielfachleitungen (15) unter Verzögerung der gespeicherten Ausgabe.

3. System nach Anspruch 2, wobei jeder der Adreßfilter (12) so aufgebaut ist, daß er die gleichen Zellen zu zwei oder mehr der Ausgangsleitungen (O) führt, zum Zuführen eines Zellenausgabekommandos zu zwei oder mehr der Kanalpositionen der Zeitvielfachleitung, während die gleiche Zelle in dem Puffer (13) gespeichert ist.

## Revendications

1. Système de commutation de cellules destiné à recevoir des cellules sur une pluralité de lignes d'entrée (I₁ à Iₙ), chaque cellule comportant une longueur en bits fixe et consistant de données et d'une adresse indicative de la destination des données, pour commuter une cellule de telle manière que les données soient envoyées vers une destination désirée, et pour expédier les cellules commutées par l'intermédiaire d'une pluralité de lignes de sortie (O₁ à Oₘ), le système comprenant une pluralité de lignes à partage du temps (15), chaque ligne à partage du temps (15) étant associée avec une ligne respective parmi les lignes d'entrée (I) et comportant une pluralité de canaux de multiplexage par partage du temps (m), chacun étant associé avec une pluralité des lignes de sortie (O) une pluralité de moyens de conversion série/parallèle (11), chacun étant associé avec une ligne respective parmi les lignes d'entrée (I) afin de délivrer une cellule entrante à une ligne associée parmi les lignes à partage du temps (15), une pluralité de filtres d'adresse (12), chaque filtre (12) étant associé avec une ligne respective parmi les lignes d'entrée (I) afin d'identifier une des lignes de sortie (O) à laquelle une cellule est destinée sur la base de l'adresse de la cellule, et indiquant une position de canal associée avec la ligne de sortie associée à l'une des lignes à partage du temps (15), une pluralité de moyens de réordonnancement (13), chaque moyen de réordonnancement (13) étant associé avec une ligne respective parmi les lignes d'entrée (I) afin de réordonnancer, en réponse à une indication d'un des filtres d'adresse associé (12), chacune des cellules sur l'axe des temps, de telle manière que la cellule soit délivrée à une position identifiée particulière sur un canal associé avec une ligne de sortie particulière, et délivrer la cellule réordonnancée à une ligne associée parmi les lignes à partage du temps (15), une pluralité de moyens de sélecteur (16) chacun étant associé avec une ligne respective parmi les lignes de sortie (O) et relié à une pluralité des lignes à partage du temps (15) pour sélectionner périodiquement et délivrer les cellules à partir d'une position identifiée particulière dans un canal associé avec un moyen de sélecteur respectif (16) sur une ligne à partage du temps (15), et une pluralité de convertisseurs parallèle/série (18), chaque convertisseur (18) étant associé avec une ligne respective parmi les lignes de sortie (O) afin de délivrer la cellule sélectionnée par l'un des moyens de sélecteurs associés (16), toutes les lignes à partage du temps (15) étant liées en ce qui concerne les positions de canaux de telle manière que seul un canal unique qui correspond à l'une des lignes de sortie (O) existe pour chaque position sur l'axe des temps, d'où il résulte que les cellules délivrées à la même sortie ne peuvent rentrer en conflit l'une avec l'autre.

2. Système selon la revendication 1, dans lequel chacun des moyens de réordonnancement (13) comprend un amplificateur séparateur (13) pour mémoriser de façon temporaire une sortie d'un moyen associé parmi les moyens de convertisseur série/parallèle (11) et, en réponse à un ordre d'un filtre associé parmi les filtres d'adresse (12), délivrer la sortie mémorisée à l'une des lignes associées parmi les lignes à partage du temps (15), tout en retardant la sortie mémorisée.

3. Système selon la revendication 2, dans lequel chacun des filtres d'adresse (12) est configuré pour délivrer la même cellule à deux lignes de sortie (O) ou plus afin d'appliquer, alors que la même cellule est mémorisée dans l'amplificateur séparateur (13), un ordre de sortie de cellule à deux positions de canaux ou plus de la ligne à partage du temps.
